# EUROPEAN PATENT SPECIFICATION

(11) **EP 3 268 820 B1**
(45) Date of publication and mention of the grant of the patent: **08.10.2025**
(21) Application number: 16719556.9
(22) Date of filing: 29.02.2016
(51) Int. Cl.: G06Q 10/04, G06Q 10/10, G06Q 50/163, G06N 20/00, G05B 15/02

(54) **PREDICTION IN BUILDING AUTOMATION**
VORHERSAGE IN DER GEBÄUDEAUTOMATION
PRÉDICTION DANS L'AUTOMATISATION DE BÂTIMENT

(30) Priority: 11.03.2015 US 201562131749 P
(43) Date of publication of application: 17.01.2018
(73) Proprietor: Siemens Industry, Inc., Alpharetta, GA 30005 (US)
(72) Inventor: AHMED, Osman, Hawthorn Woods, Illinois 60047 (US)
(74) Representative: Isarpatent
(86) International application number: PCT/US2016/020025
(87) International publication number: WO 2016/144586

(56) References cited:
- US-A1- 2011 166 913
- US-A1- 2013 030 875
- US-A1- 2015 046 233

## Description

### CROSS-REFERENCE TO OTHER APPLICATION

This application claims the benefit of the filing date of United States Provisional Patent Application 62/131,749, filed March 11, 2015.

### TECHNICAL FIELD

The present embodiments relate generally to building automation systems.

### BACKGROUND

Building automation systems include heating, ventilation and air conditioning (HVAC) systems, security systems, fire systems, or other systems. The systems are typically formed from distributed components wired together. HVAC systems may be formed with one, two, or three separate tiers or architectural levels. In a three-tier system, a floor level network provides general control for a particular floor or zone of a building. Controllers of the floor level network provide process controls based on sensor inputs to operate actuators. For example, an adjustment of a damper, heating element, cooling element, or other actuator is determined based on a set point and a measured temperature. Other control functions may be provided. The building level network integrates multiple floor level networks to provide consistent control between various zones within a building. Panels or other controllers control distribution systems, such as pumps, fans or other central plants for cooling and heating. Building level controllers may communicate among themselves and access floor level controllers for obtaining data. The management level network integrates control of the building level networks to provide a high-level control process of the overall building environment and equipment.

Each building is run separately. Data from the different levels is used to identify faults or diagnose problems for a given building. This data for a given building may not accurately reflect a problem or the influence of the building automation on a business.
US 2015/0046233 A1 describes a computer implemented method and system for providing to a user the effectiveness of an entity by analyzing emails, social network data, CRM, calendar data, audio/video data, typing speed, galvanic skin response, etc.
US 2013/030875 A1 relates to data mining for improving site operations by recording and notifying abnormalities. It is described a method of notifying a user of site abnormalities via an application configured to access an event server having a first sensor abnormality detector connected to a first sensor, for detecting first abnormal behavior of first sub-events sensed by the first sensor.
US 2011/166913 A1 describes a methods and apparatus that determine a benchmark of energy consumption for an energy system and utilize the determined benchmark in a variety of ways. Once determined, the determined benchmark may be compared to current energy consumption and current outdoor temperature to verify proper operation of the system and identify deviations in system operation.

### SUMMARY

Degraded or other performance may be predicted with a machine-learnt classifier. Based on operation of many building automation systems, machine learning is applied. The machine learning creates a predictor. The machine-learnt predictor is applied to the operation data of any building automation system to predict future failure or other event, providing prognostics that may be used to plan maintenance and/or schedule remedial action. Machine learning uses big data in the form of data from many building automation systems to learn to automatically predict and/or perform prognostics for other building automations systems.

In one further embodiment, clustering and/or other machine learning may be used to (1) identify the building automation systems in need of prognostics and/or a fault and/or (2) extract information used for predicting. The output of the clustering and/or other machine learning is used as an input to the prediction.

In one aspect, a method of building automation predication is provided in a building management system. The method comprises the features of patent claim 1.

In a second aspect, a building management system is provided for building automation prediction. Building automation systems for heating, ventilation, and air conditioning for multiple buildings are configured to output operational input and output data. A building processor is configured to predict future degradation of a part of at least one of the building automation systems based on the input and output data being applied to a machine-learnt predictor trained from times series data from multiple examples. A display is configured to output the prediction of the future degradation.

Exemplary, a method is provided for building automation prognostics in a building management system. A building analytics system of the building management system accesses first time-series data related to operation a first building automation system over time. A first machine-learnt classifier predicts failure of a part of the first building automation system based on the first time-series data. The first machine-learnt classifier was trained based on second time-series data related to operation of other building automation systems over time. Results of the predicting are presented on a display of the building analytics system. The results include the failure and the part.

Exemplary, a method is provided or building automation prediction in a building management system. A building or distribution in the building is identified as having undesired performance based on unsupervised clustering data from a plurality of buildings including the building. A machine-learnt cerebellar model articulation controller identifies a fault within a building system of the building. A recurrent neural network is applied to time series data for the fault. The application predicts occurrence of the fault within the building system.

Other systems, methods, and/or features of the present embodiments will become apparent to one with skill in the art upon examination of the following FIGS. and detailed description. It is intended that all such additional systems, methods, features, and advantages be included within this description, be within the scope of the invention, and be protected by the accompanying claims. Additional features of the disclosed embodiments are described in, and will be apparent from, the following detailed description and the FIGS.

### BRIEF DESCRIPTION OF THE FIGURES

The components in the FIGS. are not necessarily to scale, emphasis instead being placed upon illustrating the principles of the embodiments. In the FIGS., like reference numerals designate corresponding parts throughout the different views.
FIG. 1 is a block diagram of one embodiment of a management system for building automation prediction within an enterprise;
FIG. 2 illustrates an example building automation system that may be employed in the management system;
FIG. 3 illustrates an example distinction between building level and enterprise level analytics employed by a building analytics system of the management system;
FIG. 4 shows one embodiment of building level analysis employed by the building analytics system;
FIG. 5 shows an embodiment of enterprise level analysis employed by the building analytics system;
FIG. 6 illustrates example degradation of a damper of a building automation system;
FIG. 7 illustrates example degradation of a valve of a building automation system;
FIG. 8 illustrates training and operation of a machine-learnt predictor employed by the building analytics system;
FIG. 9 is a flow diagram of one embodiment for machine learning as a precursor to prediction employed by the building analytics system;
FIGS. 10A and 10B show example clustering with case based reasoning employed by the building analytics system;
FIG. 11 illustrates one embodiment of cluster analysis using enterprise data employed by the building analytics system;
FIG. 12 is an example data representation for cluster analysis at an enterprise level employed by the building analytics system;
FIG. 13 is one embodiment of a block diagram representing machine learning using enterprise data employed by the building analytics system;
FIG. 14 is an embodiment of a block diagram of use of machine learning employed by the building analytics system to control building automation systems within the enterprise; and
FIG. 15 is a flow chart diagram of one embodiment of a method employed by the building analytics system in the management system for building automation prediction.

### DETAILED DESCRIPTION

Analytics are used in building automation. Embodiments disclosed herein provide improvements for building automation systems employing analytics. Analytics is the systematic use of physical data and related business insights developed through applied analytical disciplines (e.g. statistical, contextual, quantitative, predictive, cognitive, or other emerging models) to drive fact-based decision making for planning, management, measurement, and learning. Analytics may be descriptive, predictive, or prescriptive. For a non-building automation system example, a system may use Twitter^{®} data to accurately predict rates of heart disease by region (e.g., county). The data analytics from twitter information mirrors heart disease rates from death certificates.

For building automation, performance analytics are applied within a single building and all its systems. Big data analytics are applied across multiple buildings that belong to and/or are controlled by a given enterprise. For example, the operation of tens or hundreds of branches, franchises, or facilities are analyzed. The analytics are designed to detect operational performance deficiency, such as fault detection and diagnostics- proactively and adaptively. At an enterprise level, performance analytics of a particular building automation system and big data analytics of the enterprise in which the building automation systems are employed are combined by a management system operable to analyze and perform processes based on the combination as further described herein.

Customers or others using data analytics in building automation may benefit. A management system employing the analytics processes and structures as described herein may be used to provide quality safe, comfortable, and productive environment. Service interruptions, breakdowns, and turndown time may be reduced. Cost of ownership may be reduced, and equipment and/or systems service life may be increased. By analyzing at an enterprise level in accordance with processes employed in the embodiments of management systems disclosed herein, the focus for an enterprise or company shifts from repair and maintenance to prevention and prediction. Overall operating expense, operating expenditure, operational expense, operational expenditure (OPEX) may be reduced, allowing better utilization of capital expenditure (CAPEX).

Using machine learning, data from multiple buildings and/or meta data from the enterprise are used to create a predictor of degradation of building automation. For example, a recurrent neural network uses time series of operational data from many buildings to learn to predict degradation or other event at a future time. The learnt predictor is applied by the building analytics system to data of a building automation system to predict the future degradation of a part of the automation system. Faults are predicted to offer a prognostics of the building automation system. The prediction identifies faults ahead of time. Prognostics takes corrective actions to repair faults ahead of time. The prediction or prognostics are used to prevent downtime and associated costs, such as through scheduling maintenance before the predicted fault occurs, allowing better utilization of resources.

The machine learning for prediction is driven by data, so is suitable for big data or enterprise level building management. Rather than applying a programmed algorithm that may not be suitable for some situations, a more robust machine-trained predicator is used by the management system. The machine training is adaptable and able to automatically predict despite the volume and complexity of data.

In a further embodiment, different machine-learnt classifiers are provided by the building analytics system in a hybrid. The hybrid of different types of neural networks and/or clustering techniques may make prediction performance or failure and prognostics of failure in a building system hierarchically using supervised and unsupervised learning methods. The building automation systems with likely or possible problems and/or the problems are identified using clustering and/or a first machine-learnt classifier. For example, clustering or case based reasoning identifies commonalities among lower performance buildings. The machine-learnt predictor uses the output of the first machine-learnt classifier to predict whether or not degradation will occur and/or the time of degradation.

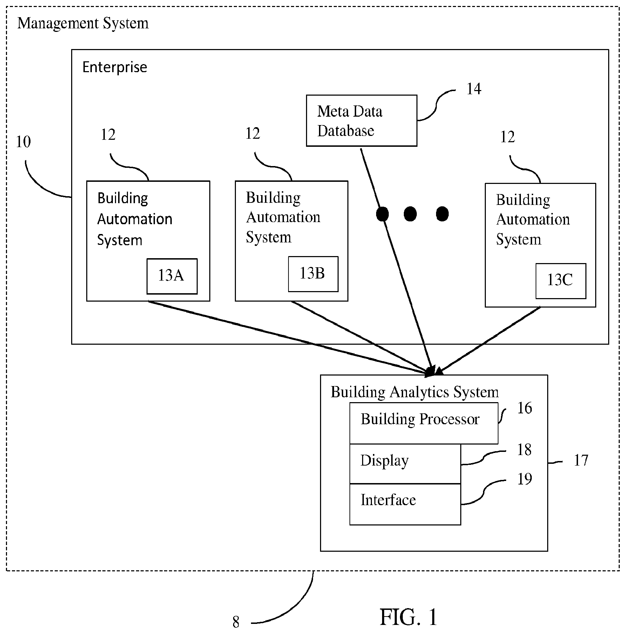

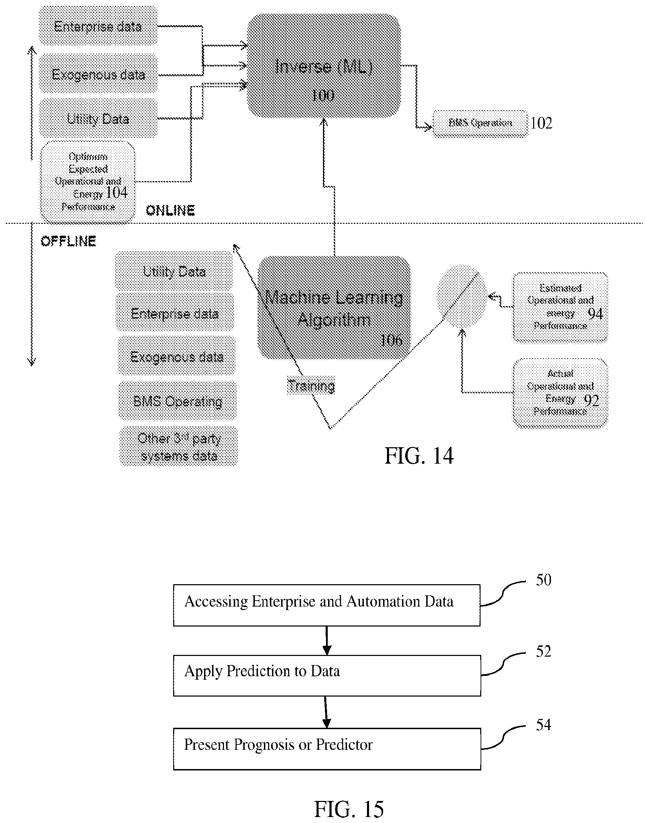

Figure 1 shows one embodiment of a management system 8 for building automation prediction. The system implements the method of Figure 15. Other methods may be implemented. The system uses big data in the form of data from many buildings or independently operating automation systems and/or in the form of meta, business, or other enterprise data not used in the control or operation of the automation systems employed in the buildings. By learning from a time series of data of many building automation systems, the management system 8 is able to apply a machine-learnt predictor of degradation based on a time series of data to any building automation systems 12.

The management system 8 includes an enterprise 10 associated with any number of building automation systems 12 and/or a meta data database 14. A computer or building analytics system 17 with a building processor 16 and display 18 are part of the enterprise 10 or separate from the enterprise 10. Additional, different, or fewer components may be provided. For example, the building analytics system 17 may include a keyboard or mouse (not shown in the figures) that is operatively connected to the processor 16 via an interface 19 for receiving user inputs. The interface 19 may also include a network communications interface for enabling the processor 16 to communicate with building automation systems 12 and meta database 14.

The enterprise 10 is a company, organization, collective, government entity (e.g., city) or individual using an automated facility or building for business activities other than the automation of the facility. Building automation includes safety (e.g., fire alarm), environmental (e.g., HVAC), security, hazard, combinations thereof or other building systems. These automated building systems 12 provide a space for conducting business. The business is provided for other purposes than automating the building, such as sales of products or services. The enterprise 10 is in business for providing products or services, but operates in one or multiple buildings with automation. For example, a bank has hundreds of buildings for branches and/or headquarters. The enterprise 10 provides banking services, and the enterprise 10 is housed in buildings.

The enterprise 10 generates information or data. The data is business data, such as for the sales, service, human resources, information technology of operation of networks different than the building automation, accounting, budgets, or other business data. This business data is enterprise 10 level meta data different than data generated as part of or for operation of the building automation systems 12.

The enterprise or meta data is stored in a meta data database 14. The database 14 is one or more memories, such as hard drives, flash drives, tape drives, or other database. The database 14 is operated as one memory or multiple separate memories to store the various meta data.

Example meta data includes employee or student performance, such as test scores or review ratings. Other meta data may be budgets, employee attendance, staffing level, maintenance schedule or information, sales, elevator usage, or other data at the enterprise level. While the data is generated as part of the enterprise, the granularity of the data may be by regions, employee, or even building. The meta data may include the type of building, orientation of the building, location of the building, types of space usage in the building, or other building specific information not specifically used or output by the building automation system 12.

The building automation systems 12 includes safety (e.g., fire alarm), environmental (e.g., HVAC), security, hazard, combinations thereof, or other building systems. The automation is of a building, floor, room, or zone hosting part of the enterprise 10. In the example of Figure 1, many (e.g., two or more, tens, or hundreds) of separate building automation systems 12 are provided. Each or some of the building automation system 12 operate independently of the others. Some buildings may be operated dependently, such as where a plant or distribution is shared. Other buildings are automated independently, such as where the buildings are in different blocks, zip codes, cities, counties, states, and/or countries. A same system (e.g., HVAC) may be in different buildings and may be controlled using the same automation system 12, but the sensors and actuators of one building are controlled separately than another building. For example, a restaurant or bank may have a same building design, so use the same design of a building automation system 12 for many different buildings. Despite these similarities, the operation of each building automation system 12 is independent as some buildings are in regions with different temperatures at a given time.

A given instance of a building automation system generates data, such as data from sensors, actuators, panels, or controllers. Sensors may include temperature, humidity, fire, smoke, occupancy, air quality, gas, CO₂ or CO, or other now known or later developed sensors, such as an oxygen sensor for use in hospitals. Actuator may include a valve, relay, solenoid, speaker, bell, switch, motor, motor starter, damper, pneumatic device, combinations thereof, or other now known or later developed actuating devices for building automation. The controllers or panels interact with other building automation devices for establishing, setting, altering, instructing, reporting, or routing information for controlling building automation functions. The controller is a panel, processor, workstation, and/or server.

Control processes are run on controllers, sensors, and actuators as appropriate for the particular operations of each device. The sensor reports information appropriate or specific to the sensor, such as reporting the result of a comparison of a measured value to a desired or set point value. Actuators use the output sensor data to provide a response appropriate for the actuator. Controllers monitor the process or action of sensors and actuators without control in one mode of operation. In another mode of operation, the controllers override or influence the sensor and/or actuators to alter processing based on a regional or larger area control process. For example, a controller implements a coordination control application for overriding, setting, adjusting or altering the operation of another building automation application. Alternatively, the controllers run processes to measure deviation from a set point and control the response.

Other building automation devices may include personal computers, panels, or monitors. For example, one building automation device is an actuator for controlling a building wide component, such as a chiller, boiler, building intake vent, or building airflow out take vent. Using the building automation devices, major or building wide equipment, individual spaces, or local input and output points are controlled. The sensors, actuators, and/or control may be for zones, rooms, distribution, and/or plant operation.

The building automation system 12 implements building automation applications for controlling building functions. The building automation applications are programmed with programmable powerful processing control language (PPCL) or other language.

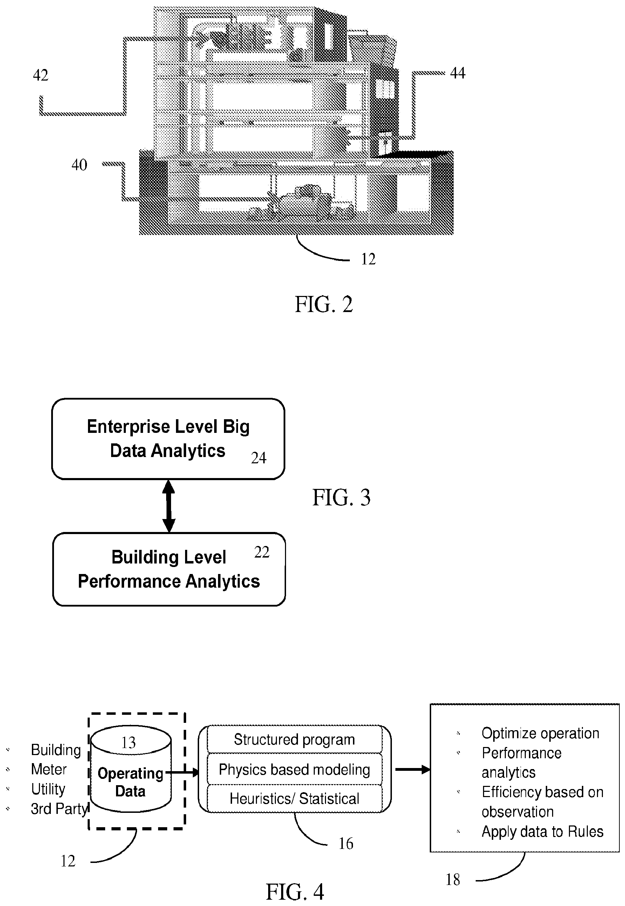

The building automation systems 12 are configured by software and/or hardware to collect, store, and output operational data 13a, 13b, and/or 13c in Figure 1. For a given building, operational data is used to monitor performance and/or to control the automation of the respective building. The data may be management data, such as logging changes and flagged errors. Report data may be output. Other operational data includes measures from sensors, actuator settings, set points, warnings, or other data generated in the operation of the building automation system 12. As represented in Figure 2, each building automation system 12 may generate operational data 13 from zones or rooms 44, distribution system 42 (e.g., air handling units), and/or one or more plants 40 (e.g., water or air cooled chiller, furnace, or broiler) employed in the building in which the building automation system 12 operates.

The operational data 13 includes input and output data. Input data is any data used to control the operation of the building automation system 12, such as sensor values. Example input values include chilled water supply and return temperatures, discharge air temperature (DAT), supply air flow (SA Flow), return air flow (RA Flow), and outside air temperature (OAT). Output data is any data measuring performance of the building automation system 12, such as energy usage, temperature variation, error signals, outside air damper % open (OAD%)), and chilled water valve % open (CHV%).

The operational data 13 is provided for different times. A time series of data is provided by the building automation system 12. At different times, such as periodically (e.g., every second, minute, hour, or day), the operational data is logged, measured, or recorded. Two or more repetitions provide the time series of data. The time series may extend for any amount of time, such as over hours, days, weeks, or years. The beginning may be from a last reset. Alternatively, a moving window is used where the beginning is a given amount of time from the current time.

This building management data, such as the operational data, is specific to the building automation system 12, so is different than the meta data stored in the database 14. The database 14 may also store the building operation data, or the building operation data is stored in other memories. Time series data from any number of building automation systems 12 is provided.

The building automation systems 12 store the operational data for access in response to a query. Alternatively, the building automation systems 12 push data to the processor 16 of the building analytics system 17 or another device. The interface 19 of the building analytics system 17 accesses the meta data database 14 and/or the building automation systems 12 to pull or collect data. Alternatively, the data is periodically pushed to the interface 19 by the respective building automation system 12. The interface 19 is a port, communications interface, or other interface for networking.

The operational data 13 and/or enterprise data (such as meta data 14 for the enterprise 10) are communicated using wired or wireless communications. A local area, wide area, Internet, or other computer network may be used to communicate the operational data to the processor 16. For within the building automaton system 12, the same or different network is used, such as an 802.15.4 network, token network, or Mesh network. Bluetooth, Wi-Fi, computer network, Ethernet, proprietary, or other standard communication protocols may be used. 802.15.4 and 802.11x provide medium access control and a physical interface to a wireless medium. Any now known or later developed network and transport algorithms may be used.

Any packet size or data format may be used. Different bandwidths for any given communications path may be provided, such as adapting a lower level network for small data packets transmitted over short distances as compared to a higher-level network adapted for larger data packets at higher rates and for longer distances.

In typical building automation, building performance is based on observed data from sensors and operation data from actuators. The enterprise 10 also generates enterprise level data. Figure 3 shows analysis of these two sources or data, operational or building level analytics 22 and enterprise level analytics 24 that may be performed by the building analytics system 17 of the management system 10. While the building automation systems 12 may be diagnosed by the building analytics system 17using building level performance analytics 22, less information is available and the impact on operation of the enterprise is not provided. By including or providing enterprise level analytics 24, the impact of building automation on the enterprise 10 may be determined or vise versa by the building analytics system 17 as further described herein. Data analytics is used at an enterprise level by the building analytics system 17 for controlling the building automation systems 12 with or without the meta data 14. Meta data analysis by the building analytics system 17 for an enterprise may identify failures or other performance by type of building, time of day, and/or relationship to business information or other global data. The building analytics system 17 may employ such data analytics 24 in combination with performance analytics 23 to detect performance measures, such as budget expenditure for optimizing resource utilization and/or server scheduling within the enterprise 10.

Figure 4 shows an example representation of the building level performance analytics 22 of Figure 3 that may be employed by the building analytics system 17. Operating or operational data 13 from one or more building automation systems 12 that is received by the building analytics system 17 may include data from within the building, meter data, utility data, and/or third party (e.g., company providing HVAC services). A structured program, physics-based modeling, or heuristic or statistical based analysis by the processor 16 of the building analytics system 17 provides information on the display 18 and/or to be used for operating the respective building automation system 12. The information based on analysis is used to optimize performance, indicate performance, improve efficiency, or the use as feedback for controlling the building automation systems 12.

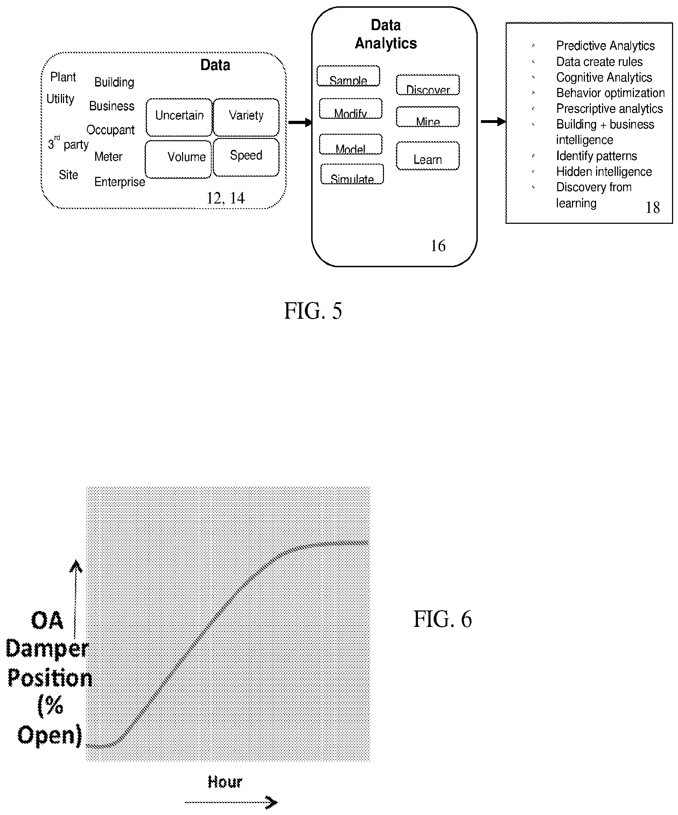

Figure 5 shows an example representation of including both building level and enterprise level data in the analytics employed by the building analytics system 17. Operating data 13 from the building automation systems 12, such as the data discussed above for Figure 4, is included with enterprise data from the database 14 that is accessible and received by the building analytics system 17. The enterprise data is building site data, occupant data, business data, or other meta data from the meta data database 14. The processor 16 applies data analytics to the converged data 13 and 14 from the business, building, plant, utility, third party, site, meter, enterprise, and/or other sources. The processor 16 may employ one or more types of analytics, including sampling, modifying, modeling, simulating, discovering, mining, and/or learning. The analytics is used by the building analytics system 17 to predict, create rules, derive cognitive information, optimize behavior, prescribe, make decisions in building and business matters, identify patterns, find hidden information, or discover unknown relationships for output to the display 18 or to another device in the management system 18. Performance analytics may be gathered by the building analytics system 17 for the entire energy system within a building (e.g., as represented by a respective building automation system 12 in Figure 1), within an entire enterprise 10, over a region, or in a collection associated with the enterprise 10 managed by the management system 8. The result is the building analytics system 17 generates converged data 13 and 14 and uses the converged data to employ analytics to create valuable knowledge and insights for the enterprise 10. The building analytics system 17 may use any of various sources of input data and building data with any of various data analytics to provide various information, such as control functions or a diagnosis of a potential fault for a building automation system 12 or other device within the enterprise 10.

In one embodiment, the data analytics employed by the building analytics system 17 includes correlating multiple variables represented in the data 13 and 14 with one or more performance criteria also represented in the data. Other sources of performance may be used. Any clustering or case based analysis may be used. By including data 13 from multiple building automation systems 12 and/or enterprise data 14, this unsupervised learning by the building analytics system 17 may indicate useful information for diagnosis, prognostics, planning, or operation. Unsupervised learning employed by the building analytics system 17 determines the relationship of input variables or values of the variables to any user selected performance criterion or criteria without prior training of a classifier. The unsupervised learning employed by the building analytics system 17 indicates relationships based on data currently available without prior modeling or simulation. Additional or different machine learning may be used by the building analytics system 17 to identify building automation systems 12 and/or parts associated with poor performance, such as using cerebellar model articulation controller (CMAC) for classifying a fault.

The information output by the clustering or other classification of the building analytics system 17 is used with or without the operating data of many building automation systems 12 to machine train a predictor of degraded or other operation or make a prognostics. The clustering or other classification may output a time series. The operation data is in a time series. The predictor is trained by the building analytics system 17 using time series data. In an alternative embodiment, the predictor is trained without the clustering or other classification and/or without time series data.

Once trained, the predictor is used by the building analytics system 17 to predict for any given building automation system 12, such as one of the building automation systems 12 used for training or a different building automation system 12 not used for training. The operation data 13, classification (e.g., clustering) outputs, and/or other input feature of the predictor is input to the predictor of the building analytics system 17.

Referring to Figure 1, the building processor 16 and display 18 are part of a building analytics system 17. The building analytics system 17 extracts data included in the operational data 13 and/or enterprise data 14 that is obscured from the user to become viewable through a machine learning process and/or application of a machine-learnt predictor performed by the building analytics system 17.

The building processor 16 is a computer, server, panel, workstation, general processor, digital signal processor, application specific integrated circuit, field programmable gate array, analog circuit, digital circuit, combinations thereof, or other now known or later developed device for processing big data and determining the relationship of big data to building automation or vice versa. The building processor 16 is a device for performing the data analytics, such as the machine learning.

The processor 16 is part of the enterprise 10. In one embodiment, the data analytics is performed by a management computer of a building automation system 12. Alternatively, the processor 16 is separate from the enterprise 10 to provide the data analytics as described herein to the enterprise by the building analytics system 17 as depicted in Figure 1, such as being provided as a service. For example the building analytics system 17 may be a server in network communication with the building automation systems 12 and meta data database 14 of the enterprise 10 to perform the data analytics as described herein and then output control or other information to the enterprise 10 and/or different building automation systems 12 distributed in different buildings for control.

The processor 16 of the building analytics system 17 is configured to analyze the data, such as the building automation operation data 13 and/or the enterprise data 14. The data represents various variables. Values are provided for the variables. The values may be measures of the variable over time, by location (e.g., value for each building automation system), constant, or combinations thereof. For classification and clustering, big data is pre-selected by the user or default big data is used. For prediction, bid data is pre-selected by the user or default big data is used. Output from other classification may additionally be used for prediction by the processor 16. The big data represents variables of the operational and/or enterprise data. The big data is used by the building analytics system 17 for the machine learning.

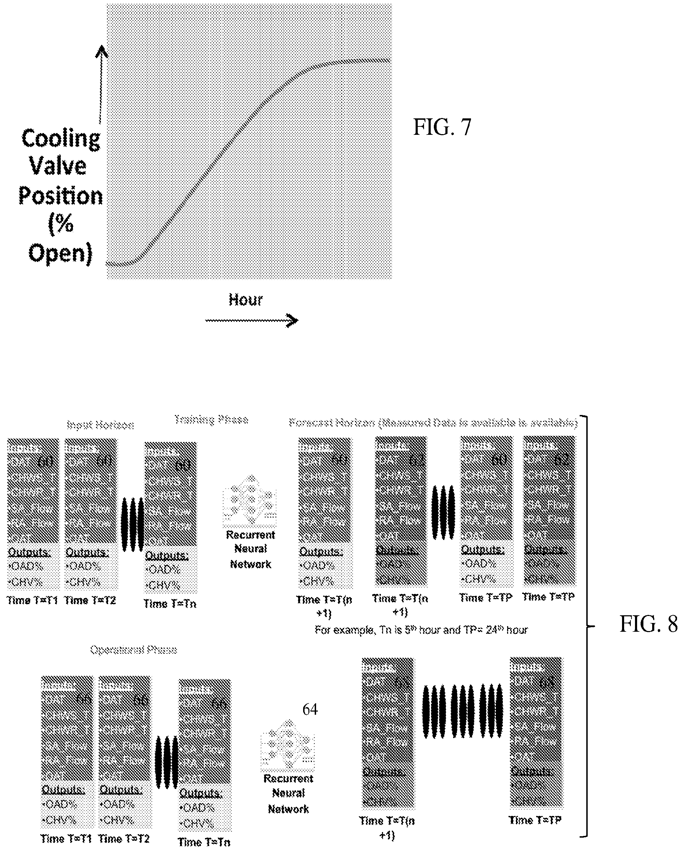

The building processor 16 of the building analytics system 17 performs machine training to relate input features to predictions of degradation, other event, or forecast. For example, Figure 6 shows a damper position of a building automation system 12 as a percentage of open over time. Similarly, Figure 7 shows a cooling valve position of a building automation system 12 as a percentage of open over time. The fully open position after a given number of hours represents degraded performance. The building processor 16 trains a machine-learnt classifier to predict whether degradation will occur based on the input time series.

The processor 16 of the building analytics system 17 applies machine learning to the data. The machine learning as employed by the building analytics system 17 enables the processor 16 to determine a statistical or other relationship between the data. The time series data is used for training as well as the ground truth. A sub-set of times is used as input features. Another sub-set associated with the performance criteria (e.g., part failure) of the time series is used by the building analytics system 17 as the ground truth. The machine learning employed by the building analytics system 17 relates the input operation data for time prior to the times of degraded performance to predict the degraded performance. Figure 8 shows an example. The training data includes data sets 60 of input and output data for different times, such as 24 sets over 24 hours. A sub-set, such as hours 1-20, of the sets 60 are used as inputs. The remaining sub-sets, such as hours 21-24, of the sets 60 are used as ground truth. The machine learning learns to predict the operational data from the input using the ground truth from many examples (e.g., many building automation systems 12 operating over the same period). The machine training by the building analytics system 17 determines the relationships between the input features to forecast input and output data sets 62. Upon application, the forecast operation data is analyzed by the processor 16 and/or the user to identify degraded performance or other event. Alternatively, the machine learning learns to directly forecast the failure, degradation, or other event.

Any now known or later developed machine learning may be used by the building analytics system 17, such as neural network. For example, the processor 16 of the building analytics system 17 uses a recurrent neural network or other machine learning based on a time series to predict the future time series and/or an event.

The machine learning employed by the building analytics system 17 determines the relationship between one or a set of variables or values to another one or set of variables or values. In one embodiment, one or more variables are selected by the building analytics system 17 as performance criterion or criteria. For example, time series showing degraded performance are identified. The machine training learns to distinguish degraded performance from non-degraded performance using the time series data. Time series data prior to eventual degraded performance is distinguished from time series data prior to eventual non-degraded performance. The values of the variables corresponding to degraded performance are used as a measure of performance. The variable representing performance may be from the operational data or may be from the enterprise data. In one example, degraded performance may be reflected through increased enterprise cost. The enterprise cost over time is used as a measure of performance. The machine training employed by the building analytics system 17 learns to distinguish between time series operational data that leads to increased enterprise cost from time series operational data that does not lead to the increased enterprise cost. As another example, the operation data is used as the measure of performance, such as the percentage open of a valve or damper. In other examples, the machine training learns to predict future operation without specifically identifying degradation. A separate analysis identifies degradation or other event from the predicted sets 62 of operation data.

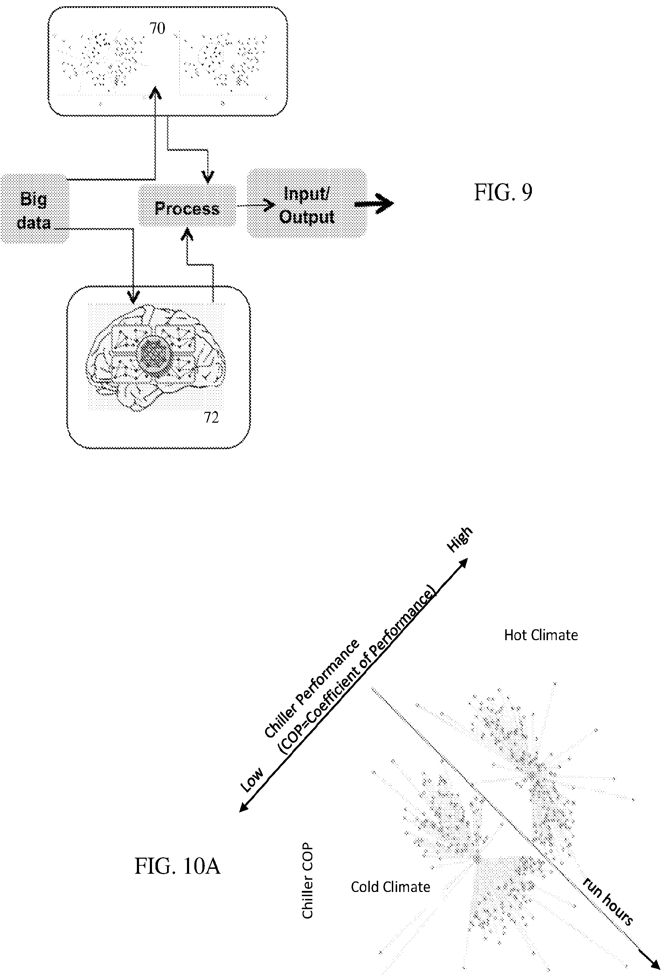

In one embodiment, a hybrid system of analytics is trained by the building analytics system 17. An additional classifier or classifiers are trained, as represented in Figure 9. One or more classifiers are trained by the building analytics system 17 to classify from the big data or data from a plurality of building automation systems 12. The same or different training data is used as for training the predictor 64. In the example of Figure 9, unsupervised learning is used by the building analytics system 17 to train a clustering classifier 70 and other machine learning (e.g., CMAC) is used to train another classifier 72. More, fewer, or other training may be used. The training for each classifier 70, 72 may be separate. Alternatively, the classifiers 70, 72 are trained by the building analytics system 17 with feedback or feed forward information or other exchange of input or output information between the classifiers 70, 72. These initial machine-trained classifiers 70, 72 are for any purpose, such as identifying particular automation systems 12 or parts thereof of interest or finding a relationship between information.

The output of the classifiers 70, 72, once trained, is processed and output by the building analytics system 17 to use in training the predictor 64. Similarly, the outputs are used for predicting from the trained predictor 64. Any synthesis of the outputs from the classifiers 70, 72 may be used. For example, the outputs from the classifiers 70, 72 are used directly as input features for the predictor training or application. As another example, one or more values are calculated by the building analytics system 17 using one or more outputs from each of the classifiers 70, 72. The calculated values are used as part of the input feature for the predictor.

In an example of use of the clustering classifier 70, unsupervised machine learning is used by the building analytics system 17. Variables from the big data are used to cluster relative to any measure of performance in order to determine which variables or values of variables distinguish between good and bad performance. Combinations of variables and the associated values may by employed by the building analytics system 17 to distinguish or correlate more strongly with the performance. The good and bad performances are relative terms based on the range of values for the performance measure. A default or user selected delineation between good and bad performance may be used. Alternatively, the clustering or other unsupervised learning employed by the building analytics system 17 applies a standard deviation or other analysis to distinguish between good and bad performance.

In one example, clustering is used by the building analytics system 17 to measure building performance. The operational data 13 of the building automation systems and/or enterprise data 14 are clustered by the building analytics system 17 to determine whether the building automation systems 12 are operating as desired. In another example, data analytics are used by the building analytics system 17 to measure performance of the enterprise, business unit, employee, customer, or other enterprise-related group. The operational data of the building automation systems and business data from a business controlling the multiple buildings are clustered by the building analytics system 17 to determine whether the building automation systems 12 impact the enterprise.

The machine learning employed by the building analytics system 17 finds patterns, behavior, family, clustering, classifications, or other grouping of factors correlating with the performance. In one example, the enterprise 10 is a school system with many buildings for schools. In this example, student performance is used as the measure of performance. This enterprise data may be test scores, grades, or other information available as meta data 14 for access by the building analytics system 17. Any or all of the operational variables of the building automation systems 12 for this school enterprise 10 may be analyzed by the building analytics system 17 to determine correlation with or degree of influence on the performance measure. In this example, the clustering as identified by the building analytics system 17 in accordance with embodiments disclosed herein may indicate that the classroom ventilation directly impacts student performance given other variables remaining the same. The group of buildings with poorer ventilation may be identified by the building analytics system 17 as a cluster.

The other variables or values may impact performance, but to a lesser degree, as determined by the building analytics system 17. Based on the identified clusters, the building analytics system 17 is able to determine whether one group of variables or values impacting performance more substantially than others. Based on pre-selected criteria, such as correlation ranking, the cluster results are ranked by the building analytics system 17 for the user to choose and use. For example, the level of influence, correlation coefficient, or relative impact is used the building analytics system 17 to distinguish between the variables or value range influence on the performance.

Figure 10A shows an example of clustering performed by the building analytics system 17 in a chiller performance example. Weather data, age of chiller controlled by a respective building automation system 12, type of chiller and geographic location from a large number of buildings (e.g., 50 buildings) are selected as input variables to the building analytics system 17. The processor 16 applies clustering to determine the relationship or correlation of the various input variables to the chiller performance, here measured as coefficient of performance. Each dot in the cluster represents one of the chillers. Performance is mapped by the processor 16 to the y-axis and run hours are mapped to the x-axis. The cluster in the upper right is associated by the processor 16 with performance in hot climates and the cluster in the lower left is associated by the processor 16 with cold climates. The climate (e.g., combination of weather data and location) is a third dimension use for clustering along the y and x-axes in case based reasoning by the processor 16 of the building analytics system 17. For case based reasoning, the processor 16 of the building analytics system 17 enables the user to select or identify (via keyboard or other input means through the interface 19) the clustering variable (e.g., climate), x-axis, and/or y-axis variables to be used. The processor 16 may also perform clustering as described herein using various combinations without user selection to identify the combination with the greatest or group of combinations with a threshold correlation. Other input variables may have less correlation with chiller performance, so the processor 16 may identify such other input variables as not determinative. Based on the clustering indicating a correlation as determined by the processor 16, the design, maintenance, or replacement of the chiller for some buildings may be handled separately from others, such as based on climate in accordance with the determined clustering correlation. This case based reasoning employed by the building analytics system 17 may be used to improve the chiller performance or other variable used for clustering.

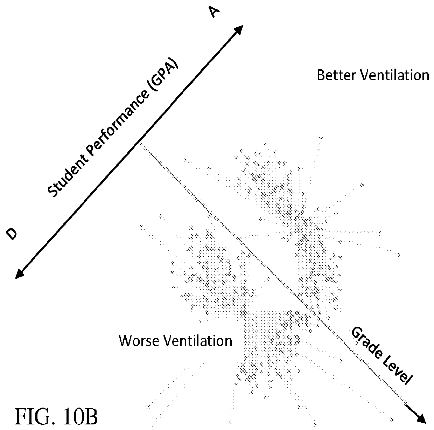

Figure 10B shows an example of clustering performed by the building analytics system 17 in the student performance example of case based reasoning with clustering. Space CO₂, ventilation, geographic location, type of distribution (e.g., water or air), age of a respective building automation system, mechanical system, and weather are selected as the input variables to the building analytics system 17, but other variables may be used. The processor 16 applies clustering (e.g., unsupervised learning) to determine the relationship or correlation of the various input variables to the student class performance (e.g., grade point average (GPA)). Each dot in the cluster represents a student. Performance (e.g., GPA) is mapped by the processor 16 to the y-axis and grade level is mapped to the x-axis. The cluster in the upper right is associated by the processor 16 with better ventilation and the cluster in the lower left is associated by the processor 16 with poor ventilation. The ventilation is a third dimension use for clustering along the y and x-axes in case based reasoning by the processor 16 of the building analytics system 17. For case based reasoning, the processor 16 of the building analytics system 17 enables the user to select or identify (via keyboard or other input device through the interface 19) the clustering variable (e.g., ventilation), x-axis, and/or y-axis variables to be used. The processor 16 may also cluster using various combinations without user selection to identify the combination with the greatest correlation or group of combinations with a threshold correlation. Other input variables may have less correlation with student performance, so the processor 16 may identify such other input variables as not determinative. Based on the clustering indicating a correlation as determined by the processor 16 in accordance with the embodiments disclosed herein, the building analytics system 17 may determine which buildings have poor ventilation for the school system enterprise 10. By improving the ventilation, student performance should increase.

In one embodiment, different types of unsupervised learning are applied by the building analytics system 17 in the management system 8 to the same data with the same performance criterion or criteria. For example, different types of clustering are applied by the building analytics system 17 such that the results from the different types of clustering (e.g., correlation coefficients of each variable to a given performance criterion) are averaged, weighted averaged, or otherwise combined by the building analytics system 17. Probability distributions may also be combined. In other embodiments, the results from the different types of clustering are automatically selected by the building analytics system 17 based on a predefined ranking. For example, the user pre-selects a ranking criterion or criteria, such as correlation ranking. The results from the different types of clustering are ranked by the building analytics system 17 for the user to choose and/or use. A processor automatically selects the higher N ranked results, where N is an integer of 1 or higher.

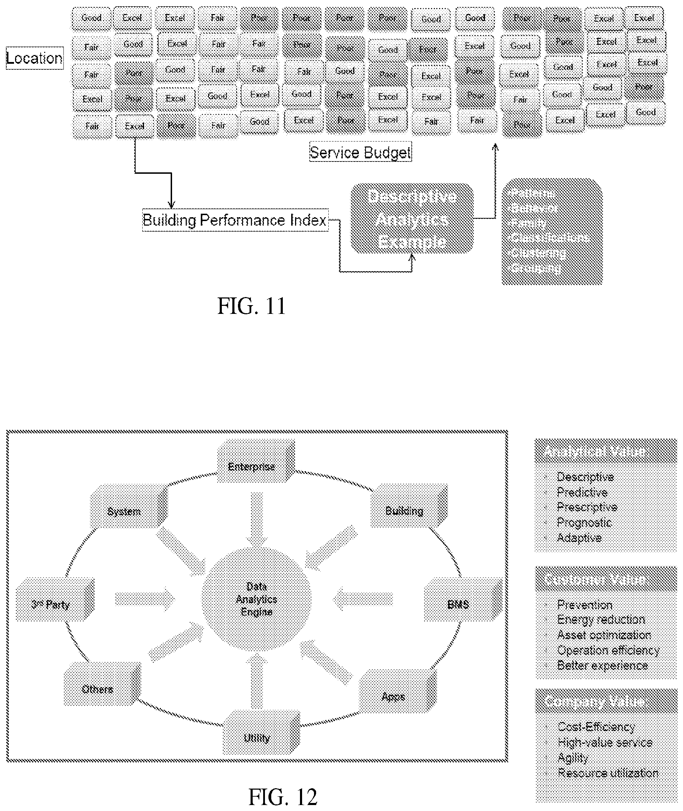

Figure 11 shows another example of cluster analysis using enterprise data 14 that is employed by the building analytics system 17. In Figure 11, each "good," "excel," "fair," and "poor" box represents a location. The building performance index or criterion is the service budget. The service budget is accessed by building analytics system 17 from the enterprise data. To find a pattern, clustering, family identification, or grouping is used by building analytics system 17. For example, the building analytics system 17 may employ clustering to identify that the number of open maintenance positions correlates with the performance of the building automation system 12 related to the service budget for the associated building automation system 12. The data is classified with unsupervised learning by the building analytics system 17 to determine enterprise level behavior resulting in the service budget level. The clustering may by the building analytics system 17 in the management system 8 for the enterprise 10 to additionally or alternatively determine commonalities of location associated with the performance, such as identifying that buildings in the enterprise 10 near large bodies of water are clustered relative to buildings spaced from water.

In one embodiment, the processor 16 of the building analytics system 17 applies unsupervised learning to identify sub-sets of building automation systems 12. The sub-set may be of underperforming systems 12 or systems 12 with optimal or sub-optimal performance. For example, in this embodiment, the processor 16 is able to identify a correlation of the operational and/or enterprise data with a measure of building automation performance to then identify both the buildings and variables for those buildings associated with the poor performance. In a banking enterprise example, the building analytics system 17 in accordance with disclosed embodiments, may identify one chiller or chillers in the banking enterprise 10 not performing equally across climatic regions. Chiller operation and location may be identified by the building analytics system 17 in a cluster of the poor performing buildings within the enterprise 10. As a result of performing clustering as disclosed herein, the banking enterprise may alter the design of the chillers in some regions of the enterprise 10 without suffering the cost of replacing chillers in all regions.

Enterprise data (e.g., meta data, service records, utility data, business data, and/or budget information), building data (e.g., age and/or location), systems data (e.g., type of distribution system - water and/or air), application data (e.g., building sensor and/or operations data), and/or other types of data are analyzed by the building analytics system 17 in accordance with disclosed embodiments, such as analyzed for building performance, enterprise performance, or other factor. The different buildings being controlled in an enterprise 10 may be a respective building automation system 12 in communication with the building analytics system 17 may be rated by the building analytics system 17 for performance using different criteria and/or sources of data. The data is used by the building analytics system 17 to find insight into the performance and/or control to optimize performance or diagnose building automation or enterprise performance. The enterprise data is used as input variables and values related to performance and/or as the performance.

The clustering is used by the building analytics system 17 to identify groupings or other information used by the predictor 64. In machine training the predicator 64 by the building processor 16, the cluster information may be used. The relationship of any cluster distinctions to forecast operation and/or degradation is learned by the building analytics system 17. Alternatively, the clustering is used by the building analytics system 17 to identify which building automation systems 12 the predictor should learn from and/or be applied to once learnt.

In another embodiment reflected in Figure 9, the clustering information may be used by the building analytics system 17 to identify a specific building automation system 12 associated with the poor performance. The other machine training employed by the building analytics system 17 learns to classify the part of the building automation from the clustering information and/or big data. This part information may be used in training and/or application of the predictor 64 by the building analytics system 17. In one example, the clustering is an unsupervised learning that broadly classifies poor performers from good performers. This can be buildings, systems within buildings, sub-systems within systems, and/or equipment within sub-systems. The CMAC is a supervised learning that works as a fault classifier. So, the goal of using CMAC is to pinpoint the problems or faults in a cascaded way. Finally, the role of prediction and prognostics is to employ the recurrent neural network for to predict occurance of the fault for any identified poor performer. The advantage of the hybrid approach is process automation that means data flows from clustering to CMAC and finally, to the recurrent neural network for prediction and prognostics.

As shown in Figure 8, the machine learning employed by the building analytics system 17 includes a training phase and an operational phase. Once the recurrently neural network or other machine learning algorithm is trained by the building analytics system 17 with the input feature (e.g., operational data sets 60) and performance measures or outputs (e.g., operational sets 60 for T₍ₙ₊₁₎), the machine-learnt predictor 64 is used to predict in the operational phase. The machine-learnt predictor 64 employed by the building analytics system 17 is a matrix or other representation of a machine-learnt classifier, such as a plurality of weights for nodes and interconnections between nodes in any number of layers from the input variables learned to map to the output variables.

To use or predict, the machine-learnt predictor 64 of the the building analytics system 17 receives an input vector. For prediction, the input vector is values of variables used for training. In the example of Figure 8, the time series of input and output data sets 66 for a given building automation system 12 is input to the building processor 16 as the vector or feature. Any number of times may be used, such as the number of times used for training. Any range of times, such as minutes, hours, days, weeks, or years may be used in the time series of the input. Based on the input vector, the machine-learnt predictor 64 of the building analytics system 17 outputs data. In one example, sets 68 forecasting the input and output data values in the future are output by the building analytics system 17. In other examples, other performance is predicted by the building analytics system 17, such as degraded operation or failure of the building automation system 12 or a part.

The learned performance being predicted and/or the forecast sets 68 of input and output data indicate degradation of the building automation system 12. The particular combination of predicted data for a time in one set 68 or variation of data across times (e.g., across forecast sets 68) indicates degradation of a particular part of the building automation system 12 or degradation in general. Alternatively, the prediction is part specific, such as different machine-learnt predictors 64 of the building analytics system 17 trained to predict degradation of different parts. In yet other alternatives, the machine-learnt predictor 64 of the building analytics system 17 predicts degradation of the overall building automation system 12 regardless of failure of any particular part.

In one example, an enterprise 10 owns 200 buildings and observes higher energy consumption of chillers installed at the same time and similar buildings. Upon further investigation, the cause is gradual degradation of a cooling coil valve and outdoor air (OA) damper with the air-handling units of the building automation systems 12 as the damper and valves seem to open to the maximum position. As a result, the chillers of the building automation systems 12 have to deliver more energy. Using any number of examples of this occurrence in combination with examples where the fault does not occur, machine learning is used by the building analytics system 17 to create the predictor 64 from the times series of both proper and improper operation. Big data in the form of many examples allows the building analytics system 17 to learn. This machine-learnt predictor 64 of the building analytics system 17may then be applied to any of the same or different building automation systems 12. The time series of input and output data for a given building automation system 12 is input to the machine-learnt predictor 64 of the building analytics system 17. The predictor 64 then predicts whether and/or when this undesired performance or degradation will occur in the future. The faults in the building automation system 12, if any, may be predicted by the building analytics system 17 so that the faults may be prevented ahead of time.

The machine-learnt predictor 64 is applied by the building analytics system 17 to data from any of the building automation systems 12. The predictor 64 may be trained for a particular building automation system arrangement, such as duplicated building automation systems 12 for similar sized buildings of an enterprise 10. In other embodiments, the predictor 64 is trained on building automation systems 12 with any amount of variation in design, such as different arrangements for different size buildings. The predictor 64 is trained by the building analytics system 17 for a particular enterprise or sub-set of buildings of a particular enterprise 10. Different predictors 64 are trained for different enterprises. Different predictors 64 may be trained for different sets of building automation systems 12 in a same enterprise 10. Different predictors 64 may be trained for predicting different information, such as predicting degraded performance for different parts of building automations systems 12. In other embodiments, a predictor 64 is trained for predicting across more than one enterprise 10.

Once trained, the predictor 64 is applied by the building analytics system 17 to any building automation system 12. Data from many building automation systems 12 is used to train the predictor 64, which is then use to predict for a given building automation system 12. The same predictor 64 may be applied by the building analytics system 17 to different building automation systems 12. The data for each building automation system 12 is input by the building processor 16 separately to predict future operation of the given building automation system 12.

Other classifiers may be used by the building analytics system 17 to determine which building automation systems 12 and/or for what type of degradation to test. Classification is used to select the data to input and/or the predictor 64 to use. For example, clustering using unsupervised learning for an enterprise 10 identifies poor performing building automation systems 12 and/or a source of poor performance (e.g., damper). A predictor 64 of the building analytics system 17 predicts future degradation for the system 12 or source for any building automation systems 12 identified by the clustering. In another hybrid approach, outputs from CMAC and clustering for many building automation systems 12 of an enterprise 10 are further synthesized and processed to provide inputs for further prediction and prognostics using a trained neural network. The trained neural network may handle large big data, such as data with the same measures made over time. The prediction is automated or semi-automated. The machine-learnt predictor 64 allows use of large amounts of data for a particular building automation system 12.

The machine-learnt predictor 64 of the building analytics system 17 may predict future degradation or other event. Any threshold for degraded verses non-degraded operation may be used. The prediction by the building analytics system 17 may be of failure or creation of improper control loop in the building automation system 12. The prediction may be of a likely time or range of likely times for the degradation to occur. The prediction may alternatively or additionally be of what part will have degraded performance or a source of degraded performance. In other embodiments, the prediction is a forecast of performance, and degradation is derived from automated or programmed analysis of the forecast performance.

Figure 12 is another representation of this overall approach employed by the building analytics system 17 to use data with unsupervised learning in building automation. Enterprise data, building automation system data (e.g., which may be part of operational data 13), data from third parties (e.g., weather or operation information from a service), utility data (e.g., rates), building data (e.g., location and size), building management system (BMS) data (e.g., which may be part of operational data 13 and/or include building asset tracking data that is not part of operational data 13), application data (e.g., specific operational data pertaining to a corresponding application of a building automation system 12, BMS or other building controller), and/or other data is analyzed by the building analytics system 17 using unsupervised learning as part of a data analytics engine implemented by the building analytics system 17 as shown in Figure 8. This learning may be descriptive, predictive, prescriptive, prognostic, or adaptive for each of the building automation systems 12 and/or the enterprise 10. The learned relationships identified by the building analytics system 17 in accordance with the embodiments disclosed herein may be used to prevent problems, reduce energy usage, optimize assets, increase efficiency, and/or provide better experience. The analysis is provided by the building analytics system 17 as network component of the enterprise 10 or as a remote service for the enterprise 10 to assist the enterprise in cost efficiency, valued service, agility, and/or resource utilization. Relationships between any variables and any performance may be provided to the building analytics system 17 employing the clustering analytics embodiments disclosed herein. By analyzing big data, large amounts of variables, a broad range of values, or variables with measures over many samples (e.g., many buildings), the building analytics system 17 may use clustering to identify unexpected relationships and/or hypotheses for improving performance within the associated enterprise 10.

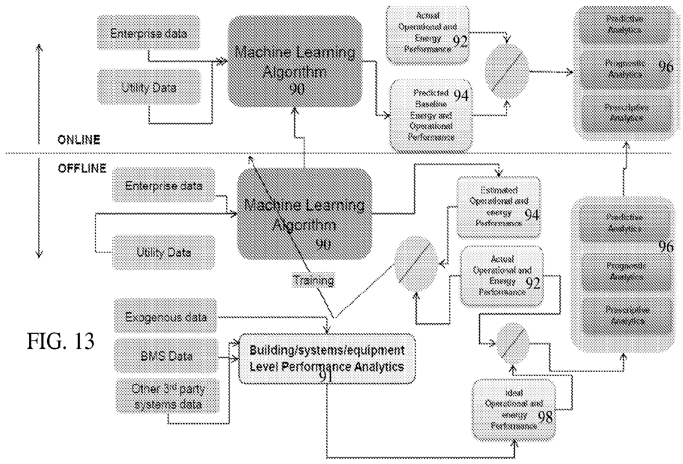

Other types of machine learning may be used by the building analytics system 17 in addition to or instead of machine learning a predictor 64. Rather than clustering or case-based reasoning, a machine learnt classifier employed by the building analytics system 17 may be trained to diagnose operation of the enterprise and/or building automation system using both building automation data and enterprise data. Figure 13 represents an example. In an offline process, the building analytics system 17 trains a classifier 90 using enterprise data, utility data, and/or other data. The classifier 90 is trained to estimate 94 operational and/or energy performance. Other performance measures may be used. In a feedback or online learning approach, the training employed by the building analytics system 17 may include comparison of estimated 94 verses actual 92 performance. Using this process, the building analytics system 17 continues the training until a desired accuracy is reached.

Exogenous data, building management system data, other third party data, and/or other data is analyzed by the building analytics system 17 for performance 91. This data analytics by the building analytics system 17 may yield an ideal or desired performance 98, such as using clustering to identify the characteristics (e.g., values) for correlated variables of buildings with better performance. The building analytics system 17 compares this desired performance 98 with the actual performance 92. Using predictive, prognostic, and/or prescriptive analytics 96, the comparison by the building analytics system 17 may trigger an upgrade, change, or retraining of the online predictor or trained classifier.

Once trained, the machine-learnt classifier 90 employed in the building analytics system 17 receives the input feature vector from the enterprise, utility, or other data to predict performance 94. The predictive performance 94 may be compared by the building analytics system 17 to actual performance 92 for use in other various analytics 96. The output of the machine-learnt classifier 90 may be used in clustering processes performed by the building analytics system 17, such as relating predicted performance 94 of the energy or operation of the building automation to an enterprise performance variable. Clustering as employed by the building analytics system 17 may be used to derive an input for the input features vector of the machine-learnt classifier 90.

In another embodiment represented in Figure 14, an inverse machine-learnt classifier 100 is employed in the building analytics system 17. In this embodiment, the building analytics system 17 trains the classifier 100 to use various data to predict performance 94 based on actual performance 92. Some of the data used as an input to the training of the machine-learnt classifier 106 includes building automation data, such as set points, operation sequence, operating ranges, or other control information. The inverses machine-learnt classifier 100 of the machine-learnt classifier 106 may convert desired performance 104 into building management system operation parameters 102 (e.g., set points, sequence of operations, and/or operation range, such as sets 68). Enterprise and building automation operational data are used in the training and inversion.

The data to be used for training and inversion may be determined by clustering employed by the building analytics system 17 in accordance with the embodiments described herein. The variables most determinative of the desired operation or energy performance 104 are determined by clustering pre-process by the building analytics system 17.

Returning to Figure 1, the display 18 is a liquid crystal display, light emitting diode display, CRT, monitor, plasma, projector, printer, or other display. The display 18 is configured by the processor 16 to present results of the machine-learnt prediction as employed by the building analytics system 17. In one example, occurrence of degradation, an estimated time of occurrence, a part of the building automation system 12 involved in the degradation, and/or forecast operation of a part or the building automation system 12 is output by the building processor 16 on the display 18. In yet another example, the buildings or building automation systems 12 identified by the building analytics system 17 as suffering from a problem are output to the display 18.

In other embodiments, the processor 16 transmits results for use in control or other uses. The building automation systems 12 may be controlled to increase performance. The results may be transmitted to a manager or service to schedule maintenance to avoid failure or degradation. The prediction is used to avoid downtime or costs associated with improper operation. The building processor 16 outputs the prediction to the technician on the display 18, outputs a message to a supervisor, or outputs a calendar event for training.

Figure 15 shows one embodiment of a method for building automation prediction in a building management system. The method is implemented by the building management system 8 of Figure 1 or a different system.

Additional, different or fewer acts may be provided than shown in Figure 15. For example, act 54 is not performed, but instead a transmission, storage, or rule-based action occurs using the prediction or results of the forecast.

Figure 15 represents either learning to predict with machine learning or application of a machine-learnt predictor 64. The method is first discussed in a learning or training phase. The method is then discussed below in an operation or application phase.

In act 50 for learning, a building processor or other part of the building analytics system accesses data related to a plurality of buildings through an interface 19 or from memory. The access is by receipt of information, request of information, or loading information. Multiple memories may be mined by the processor in the management system 10 related to multiple building automation systems in an enterprise. In alternative embodiments, data related to a single building is accessed.

The data includes building management system or building automation system operational data with or without enterprise data different than the building management system or building automation system data. The building automation systems in the enterprise and in communication with the building management system generate data specific to the building automation. For example, actuator settings, sensor readings, set points, meter information, weather, utility information, measures of performance, or other input or output data for the daily operation of the respective building automation system are accessed. The building management system includes automation for heating, cooling, ventilation, fire safety, or combinations thereof data.

The enterprise generates data specific to the business of the enterprise. The business of the enterprise is not automation of the buildings. Instead, budget, maintenance, employee complaint, or human resources data of the enterprise is accessed.

The enterprise data is accessed by the processor from an enterprise database 14. The enterprise database 14 is one or more memories organized as one database or as separate data structures. The enterprise data representing one or more variables is accessed. The values for a given variable may be the same or different across the multiple buildings. For example, the maintenance budget for the building is associated with the multiple buildings but may or may not be different for different buildings. The amount of deviation from the budget is more likely to be different for different buildings.

The accessed data may be all or a default sub-set of all available data. Alternatively, a user indicates the data to access. The user configures the analysis by indicating the prediction to be made, such as the user indicating a prediction of whether valve or damper operation will degrade. This input may indicate specific data to access, such as data likely to be used by machine learning to predict the operation. In other embodiments, a specific part is not indicated. Instead, the operation of the automation system in general, all parts, or default ones of the parts of the building automation are to be predicted. The machine learning may indicate which variables and corresponding data correlate with the prediction and which do not. Less than all of the originally selected data is used for the trained predictor 64, such as just using the determinative variables.

Some of the accessed data includes a time series. Data from different times is accessed to be used for learning to predict. Values for the same variables of the same devices (e.g., building automation component parts) are provided at different times. For example, the sets 60 of Figure 8 are accessed. The times of measurement may be different for different building automation systems 12, such as measuring every hour over a day for each building automation system 12 but measuring on different days. The measurements may be repeated, such as measuring over multiple 24-hour windows over a year for a same building automation system. The accessed data provide many examples of good and poor performance for any one or more parts, where data from different times is accessed. In alternative embodiments, time-series data is not used.

In one embodiment, data is also accessed by the processor for classification other than prediction. For example, data to machine train a classifier and/or data for unsupervised (e.g., clustering) machine learning is accessed. The classifier is trained to output desired information, such as identify a source of fault and/or identify poor performing building automation systems 12. The role of classification is to broadly classify good performers from bad performers. The result is then fed into CMAC learning to identify a source of the fault. This may be used to limit the training of the predictor 64 to particular building automation systems 12, parts, or faults. For example, clustering is used by the processor to distinguish good and poor performing building automation systems 12. Prediction is learned from data from the poor performing building automation systems 12, such as data during good performance as well as bad performance. Data from the good performing buildings is not used. Alternatively, data from both sets of buildings is used, but used differently in learning to predict

In act 52 for learning, a building processor 16 of the building analytics system 17 applies machine learning to the accessed data. For learning to predict, some of the data is used as input to the learning and other of the data is used as a measure of performance or the ground truth of the predicted operation. For example and as represented in Figure 8, some sets 60 of data are used by the processor as the input horizon, providing a time series of operation as the input. Other sets 60 are used by the processor to represent the operation to be predicted. Alternatively or additionally, a measure of performance (e.g., energy usage, error, fault) is used by the processor as the ground truth in the forecast horizon for learning to predict the occurrence and timing of the event. Outputs from other classification (e.g., clustering and/or CMAC) may be used as input data and/or as ground truth for learning.

The machine learning employed by the processor is a neural network, a recurrent neural network, or other machine learning for dealing with a time series or prediction. The machine learning learns to statistically relate the input values to the ground truth. For a neural network, layers of nodes, weights for the nodes, and connections between the nodes are learned to predict or forecast the output sets 62 representing future operation from the input vector (i.e., input horizon sets 60). Other data that is not time series may be used as an input, such as an enterprise variable that is predictive of future fault or operation.

Using many examples in the training in the management system, the machine learning by the processor may be more accurate. The many examples may make the machine learning more able to learn to predict given input values different than any of the training data.

In act 54 of the learning, the building processor 16 of the analytics system 17 outputs results of the application of machine learning to a display 18, network, memory, or other processor. The machine-learnt predictor 64 of the operation of the building automation systems 12 is output. For example, the learnt neural network, such as in the form of a matrix, for predicting degradation is output. More than one machine-learnt predictor 64 may be output, such as outputting predictors 64 trained to make different predictions. For example, the predictor 64 is trained to predict operation of a part or sub-system of the building automation systems 12. The predictor 64 may additionally or alternatively predict a time of occurrence of degraded or other performance.

The output machine-learnt predictor 64 is used or applied. Later-acquired data, relative to the training data, is input to the machine-learnt predictor 64. The machine-learnt predictor 64 forecasts the operation or occurrence of an event (e.g., degraded performance) based on the input data, but without the ground truth. Future operation is predicted. Figure 15 represents this application of the machine-learnt predictor 64.

The same or different building processor 16 and/or building analytic system 17 apply the learnt predictor 64. In other embodiments, a given building automation system 12 applies the predictor 64.

In act 50, the building analytics system 17, building processor 16, or other device of the building management system 8 accesses input data. The input data is from a given building automation system 12. Different building automation systems 12 are analyzed separately. Some of the same data may be used for different building automation systems 12, such as enterprise data associated with the different automation systems 12 or data output by other machine-learnt classification.

The same type of data used to train is accessed by the processor. The type of data used for ground truth is not accessed as the machine-learnt predictor 64 predicts the future or makes a forecast. In the example of Figure 8, the sets 66 of data from operation over a range of time are accessed from memory, transmission, or receipt. These sets 66 are a time series of operational data for the building automation system 12 being analyzed.

In act 52 of the application of the learned predictor 64 by the processor, the machine-learnt classifier (i.e., predictor 64) predicts operation of the building automation system 12 or part of the building automation system 12. The analytics system 17 or building processor 16 inputs the accessed data of the input vector into the machine-learnt predictor 64.

Based on the input data, the machine-learnt classifier employed by the processor outputs the forecast or prediction. For example, failure of a part is predicted based on the input times-series data with or without other data. As another example, a time of degraded performance (e.g., starting or range of times) is predicted. In other embodiments, the operation over time is forecast. The forecast operation is analyzed to identify the information of interest (e.g., identify failure using any criterion from the predicted operation data).

The machine-learnt classifier is applied by the processor to any building automation system 12. In one embodiment, the building automation system 12 to which the predictor 64 is to be applied is identified with a different machine-learnt classifier. For example, clustering is used to identify poorly performing building automation systems 12. Any data, such as the same or different data, is used for this initial classification. Data from all or many building automation systems 12 is input to classify membership or cluster. The predictor 64 is then applied to the building automation systems 12 with poor performance. The predictor 64 indicates if and/or when failure or further degradation will occur based on input data for the given building automation system 12. For example, the trained recurrent neural network is separately applied to operation time-series data from each poorly performing building automation system 12. The neural network outputs the forecast for each automation system 12. In other embodiments, the predictor 64 is applied to user selected, all, or other building automation systems 12.

In act 54 of the application of the machine-learnt predictor 64, the forecast, prediction, and/or prognostics are presented on the display 18 of the building analytics system 17 by the processor 16. The output may be instead transmitted and output on another device, such as printed or displayed remotely.

Any results, such as failure occurring, the building automation system 12 expected to fail, the part expected to fail, the time of expected failure, or other prediction of failure, is output. The result may be failure, degraded performance, enhanced performance, or other event associated with building automation. The forecast operation may be output. Alternatively, information derived from the forecast operation is output, such as a time and/or device operating in an undesired way. Probability information may be output, such as providing a range of times of expected degradation in performance with probabilities of the degradation provided for each of the times.

The output may be used to schedule maintenance, such as replacing a part before breakage and/or during an already scheduled shut down. The output may be used to identify commonality for altering design. The output may be used to alter operation of the enterprise 10, such as relocating employees before an expected shutdown. The output may be used to initiate analysis by a technician in an effort to identify a control problem.

While the invention has been described above by reference to various embodiments, it should be understood that many changes and modifications can be made without departing from the scope of the invention. It is therefore intended that the foregoing detailed description be regarded as illustrative rather than limiting, and that it be understood that it is the following claims, including all equivalents, that are intended to define the scope of this invention.

## Claims

1. A method of building automation prediction in a building management system (8), the method comprising:
accessing (50) first data related to a plurality of buildings by a building analytics system (17) of the building management system (8), wherein the first data includes building management system data from different times and enterprise data different than building management system data, wherein the enterprise data for an enterprise is associated with the plurality of buildings, wherein the building management system data is for the buildings of the plurality of buildings and comprises operational data comprising input and output data, wherein input data is data used to control the operation of a building automation system (12) and output data is data measuring performance of the building automation system (12), wherein the building management system data comprises heating, cooling, ventilation, fire safety, or combinations thereof data;
applying (52), by the building analytics system (17), the first data from a first sub-set of the different times to machine learning with the first data from a second sub-set of the different times as a ground truth for learning prediction of the building management system (8), wherein the machine learning is to learn predicting the output data; and
outputting (54), as a result of the applying (52), a machine-learnt predictor (64) of operation of the building automation systems (12);
wherein the machine-learnt predictor is a predictor of degraded performance of a part of or a sub-system of the building automation systems (12).

2. The method of claim 1 wherein accessing (50) the enterprise data comprises accessing (50) budget, maintenance, employee complaint, or human resources data of the enterprise.

3. The method of claim 1 wherein applying (52) comprises applying to a neural network.

4. The method of claim 3 wherein applying to the neural network comprises applying to a recurrent neural network.

5. The method of claim 1 wherein applying (52) comprises applying (52) with the first and second sub-sets comprising times series of inputs and outputs of the building automation systems (12) of the building management system (18).

6. The method of claim 1 wherein outputting (54) comprises outputting (54) a learnt neural network for predicting degradation in the building automation systems (12).

7. The method of claim 1 wherein outputting (54) comprises outputting (54) the machine-learnt predictor as a predictor of a time of occurrence of degraded performance of a part of or a sub-system of the building automation systems (12).

8. The method of claim 1 further comprising applying the machine-learnt predictor to later-acquired second data for each of a plurality of the building automation systems (12).

9. The method of claim 1 further comprising classifying the building automation systems (12) into first and second groups with a machine-learnt classifier, wherein the applying and outputting is performed for the first group.

10. A building management system (8) for building automation prediction, the system comprising:
building automation systems (12) for heating, ventilation, and air conditioning, the building automation systems (12) being for multiple buildings and configured to output operational input and output data comprising heating, cooling, ventilation, fire safety, or combinations thereof data;
a building processor (16) configured to predict future degradation of a part of at least one of the building automation systems (12) based on the input and output data and enterprise data different than building management system data, the enterprise data for an enterprise associated with the plurality of buildings and the building management system data for the buildings of the plurality of buildings, wherein he input and output data and enterprise data are applied to a machine-learnt predictor (64) trained from times series data from multiple examples using the method of any of the preceding claims; and
a display (18) configured to output the prediction of the future degradation, wherein the prediction is a machine-learnt predictor of degraded performance of a part of or a sub-system of the building automation systems (12).

11. The building management system of claim 10 wherein the building processor (16) is configured to apply the machine-learnt predictor (64) to the input data and output data of each of the building automation systems (12).

12. The building management system of claim 10 wherein the prediction of the future degradation comprises a time of failure, or wherein the building processor (16) is configured to predict based on an output of a machine-learnt classifier, the output of the machine-learnt classifier based on the input and output data.

## Patentansprüche

1. Verfahren zur Vorhersage in der Gebäudeautomation in einem Gebäudemanagementsystem (8), umfassend:
Zugreifen (50) durch ein Gebäudeanalysesystem (17) des Gebäudemanagementsystems (8) auf erste Daten, die sich auf eine Vielzahl von Gebäuden beziehen, wobei die ersten Daten Gebäudemanagementsystemdaten aus unterschiedlichen Zeiten und Unternehmensdaten umfassen, die sich von den Gebäudemanagementsystemdaten unterscheiden, wobei die Unternehmensdaten für ein mit der Vielzahl von Gebäuden assoziiertes Unternehmen vorliegen, wobei die Gebäudemanagementsystemdaten für die Gebäude der Vielzahl von Gebäuden vorliegen und Betriebsdaten umfassen, die Eingabedaten und Ausgabedaten umfassen, wobei Eingabedaten Daten sind, die zum Regeln des Betriebs eines Gebäudeautomationssystems (12) verwendet werden, und Ausgabedaten Daten sind, die die Leistung des Gebäudeautomationssystems (12) messen, wobei die Gebäudemanagementsystemdaten Daten zu Heizung, Kühlung, Belüftung, Brandschutz oder Kombinationen davon umfassen;
Anwenden (52) der ersten Daten aus einer ersten Teilmenge der unterschiedlichen Zeiten auf maschinelles Lernen durch das Gebäudeanalysesystem (17), wobei die ersten Daten aus einer zweiten Teilmenge der unterschiedlichen Zeiten als Referenzdaten für das Erlernen der Vorhersage im Gebäudemanagementsystem (8) verwendet werden, wobei das maschinelle Lernen dazu ausgelegt ist, das Vorhersagen der Ausgabedaten zu erlernen; und
Ausgeben (54) eines maschinell erlernten Prädiktors (64) des Betriebs der Gebäudeautomationssysteme (12) als Ergebnis des Anwendens (52);
wobei der maschinell erlernte Prädiktor ein Prädiktor für eine verschlechterte Leistung eines Teils oder eines Teilsystems der Gebäudeautomationssysteme (12) ist.

2. Verfahren nach Anspruch 1, wobei das Zugreifen (50) auf die Unternehmensdaten das Zugreifen (50) auf Budget-, Wartungs-, Mitarbeiterbeschwerde- oder Personalabteilungsdaten des Unternehmens umfasst.

3. Verfahren nach Anspruch 1, wobei das Anwenden (52) das Anwenden auf ein neuronales Netz umfasst.

4. Verfahren nach Anspruch 3, wobei das Anwenden auf das neuronale Netz das Anwenden auf ein rekurrentes neuronales Netz umfasst.

5. Verfahren nach Anspruch 1, wobei das Anwenden (52) das Anwenden (52) mit der ersten und der zweiten Teilmenge umfasst, die Zeitreihen von Eingaben und Ausgaben der Gebäudeautomationssysteme (12) des Gebäudemanagementsystems (18) umfassen.

6. Verfahren nach Anspruch 1, wobei das Ausgeben (54) das Ausgeben (54) eines erlernten neuronalen Netzes zur Vorhersage einer Leistungsverschlechterung in den Gebäudeautomationssystemen (12) umfasst.

7. Verfahren nach Anspruch 1, wobei das Ausgeben (54) das Ausgeben (54) des maschinell erlernten Prädiktors als Prädiktor für einen Zeitpunkt des Auftretens einer verschlechterten Leistung eines Teils oder eines Teilsystems der Gebäudeautomationssysteme (12) umfasst.

8. Verfahren nach Anspruch 1, ferner umfassend das Anwenden des maschinell erlernten Prädiktors auf später erfasste zweite Daten für jeweils eines einer Vielzahl der Gebäudeautomationssysteme (12).

9. Verfahren nach Anspruch 1, ferner umfassend das Klassifizieren der Gebäudeautomationssysteme (12) in erste und zweite Gruppen mit einem maschinell erlernten Klassifizierer, wobei das Anwenden und das Ausgeben für die erste Gruppe durchgeführt wird.

10. Gebäudemanagementsystem (8) zur Vorhersage in der Gebäudeautomation, wobei das System Folgendes umfasst:
Gebäudeautomationssysteme (12) für Heizung, Lüftung und Klimatisierung, wobei die Gebäudeautomationssysteme (12) für mehrere Gebäude ausgelegt sind und Betriebs□Eingabe□ und □Ausgabedaten ausgeben, die Daten zu Heizung, Kühlung, Belüftung, Brandschutz oder Kombinationen davon umfassen;
ein Gebäude□Prozessor (16), der dazu ausgelegt ist, eine künftige Leistungsverschlechterung eines Teils von mindestens einem der Gebäudeautomationssysteme (12) auf Grundlage der Eingabe□ und Ausgabedaten sowie von Unternehmensdaten vorherzusagen, die sich von Gebäudemanagementsystemdaten unterscheiden, wobei die Unternehmensdaten für ein mit der Vielzahl von Gebäuden assoziiertes Unternehmen vorliegen und die Gebäudemanagementsystemdaten für die Gebäude der Vielzahl von Gebäuden vorliegen, wobei die Eingabe□ und Ausgabedaten und die Unternehmensdaten auf einen maschinell erlernten Prädiktor (64) angewendet werden, der anhand von Zeitreihendaten aus mehreren Beispielen unter Verwendung des Verfahrens nach einem der vorstehenden Ansprüche trainiert ist; und
eine Anzeige (18), die dazu ausgelegt ist, die Vorhersage der künftigen Leistungsverschlechterung auszugeben, wobei die Vorhersage ein maschinell erlernter Prädiktor einer verschlechterten Leistung eines Teils oder eines Teilsystems der Gebäudeautomationssysteme (12) ist.

11. Gebäudemanagementsystem nach Anspruch 10, wobei der Gebäude□Prozessor (16) dazu ausgelegt ist, den maschinell erlernten Prädiktor (64) auf die Eingabedaten und Ausgabedaten jedes der Gebäudeautomationssysteme (12) anzuwenden.

12. Gebäudemanagementsystem nach Anspruch 10, wobei die Vorhersage der künftigen Leistungsverschlechterung einen Ausfallzeitpunkt umfasst, oder wobei der Gebäude□Prozessor (16) dazu ausgelegt ist, auf Grundlage einer Ausgabe eines maschinell erlernten Klassifizierers vorherzusagen, wobei die Ausgabe des maschinell erlernten Klassifizierers auf den Eingabe□ und Ausgabedaten basiert.

## Revendications

1. Procédé de prédiction immotique dans un système de gestion d'immeubles (8), le procédé comprenant :
l'accès (50) à des premières données connexes à une pluralité d'immeubles par un système d'analytique d'immeuble (17) du système de gestion d'immeubles (8), dans lequel les premières données incluent des données de système de gestion d'immeubles provenant d'instants différents et des données d'entreprise différentes de données de système de gestion d'immeubles, dans lequel les données d'entreprise pour une entreprise sont associées à la pluralité d'immeubles, dans lequel les données de système de gestion d'immeubles sont pour les immeubles de la pluralité d'immeubles et comprennent des données de fonctionnement comprenant des données d'entrée et de sortie, dans lequel des données d'entrée sont des données utilisées pour commander le fonctionnement d'un système immotique (12) et des données de sortie sont des données mesurant des performances du système immotique (12), dans lequel les données de système de gestion d'immeubles comprennent le chauffage, le refroidissement, la ventilation, la sécurité incendie, ou de combinaisons de ceux-ci ;
l'application (52), par le système d'analytique d'immeuble (17), des premières données provenant d'un premier sous-ensemble des instants différents à un apprentissage machine avec les premières données provenant d'un second sous-ensemble des instants différents en tant que réalité de terrain pour la prédiction d'apprentissage du système de gestion d'immeubles (8), dans lequel l'apprentissage machine consiste à apprendre la prédiction des données de sortie ; et
la sortie (54), en conséquence de l'application (52), d'un prédicteur appris par machine (64) de fonctionnement des systèmes immotiques (12) ;
dans lequel le prédicteur appris par machine est un prédicteur de performances dégradées d'une partie ou d'un sous-système des systèmes immotiques (12).

2. Procédé de la revendication 1, dans lequel l'accès (50) aux données d'entreprise comprend l'accès (50) à des données de budget, de maintenance, de plainte d'employée, ou de ressources humaines de l'entreprise.

3. Procédé de la revendication 1, dans lequel l'application (52) comprend l'application à un réseau neuronal.

4. Procédé de la revendication 3, dans lequel l'application au réseau neuronal comprend l'application à un réseau neuronal récurrent.

5. Procédé de la revendication 1, dans lequel l'application (52) comprend l'application (52) avec les premier et second sous-ensembles comprenant des séries chronologiques d'entrées et de sorties des systèmes immotiques (12) du système de gestion d'immeubles (18).

6. Procédé de la revendication 1, dans lequel la sortie (54) comprend la sortie (54) d'un réseau neuronal appris pour prédire une dégradation des systèmes immotiques (12).

7. Procédé de la revendication 1, dans lequel la sortie (54) comprend la sortie (54) du prédicteur appris par machine en tant que prédicteur d'un instant d'apparition de performances dégradées d'une partie ou d'un sous-système des systèmes immotiques (12).

8. Procédé de la revendication 1, comprenant en outre l'application du prédicteur appris par machine à des secondes données acquises ultérieurement pour chacun d'une pluralité des systèmes immotiques (12).

9. Procédé de la revendication 1, comprenant en outre la classification des systèmes immotiques (12) en des premier et second groupes avec un classifieur appris par machine, dans lequel l'application et la sortie sont réalisées pour le premier groupe.

10. Système de gestion d'immeubles (8) pour prédiction immotique, le système comprenant :
des systèmes immotiques (12) pour chauffage, ventilation, et climatisation, les systèmes immotiques (12) étant pour de multiples immeubles et configurés pour sortir des données d'entrée et de sortie de fonctionnement comprenant des données de chauffage, de refroidissement, de ventilation, de sécurité incendie, ou de combinaisons de ceux-ci ;
un processeur d'immeuble (16) configuré pour prédire une dégradation future d'une partie d'au moins un des systèmes immotiques (12) sur la base des données d'entrée et de sortie et de données d'entreprise différentes de données de système de gestion d'immeubles, les données d'entreprise étant pour une entreprise associée à la pluralité d'immeubles et les données de système de gestion d'immeubles étant pour les immeubles de la pluralité d'immeubles, dans lequel les données d'entrée et de sortie et les données d'entreprise sont appliquées à un prédicteur appris par machine (64) entraîné à partir de données de séries chronologiques provenant de multiples exemples en utilisant le procédé de de quelconques des revendications précédentes ; et
un écran d'affichage (18) configuré pour sortir la prédiction de la dégradation future, dans lequel la prédiction est un prédicteur appris par machine de performances dégradées d'une partie ou d'un sous-système des systèmes immotiques (12).

11. Système de gestion d'immeubles de la revendication 10, dans lequel le processeur d'immeuble (16) est configuré pour appliquer le prédicteur appris par machine (64) aux données d'entrée et aux données de sortie de chacun des systèmes immotiques (12).

12. Système de gestion d'immeubles de la revendication 10, dans lequel la prédiction de la dégradation future comprend un instant de défaillance, ou dans lequel le processeur d'immeuble (16) est configuré pour prédire, sur la base d'une sortie d'un classifieur appris par machine, la sortie du classifieur appris par machine sur la base des données d'entrée et de sortie.
